# EUROPÄISCHE PATENTANMELDUNG

(11) **EP 1 650 254 A1**
(43) Veröffentlichungstag der Anmeldung: **26.04.2006**
(21) Anmeldenummer: 05021875.9
(22) Anmeldetag: 07.10.2005
(51) Int. Cl.: C08J 7/16

(54) **Dichtung mit reduziertem Drehmoment, Verfahren zur Herstellung, deren Verwendung als Dichtung für Klappenventile und Klappenventil**

(30) Priorität: 22.10.2004 DE 102004051781; 02.06.2005 DE 102005025253
(71) Anmelder: Carl Freudenberg KG, 69469 Weinheim (DE)
(72) Erfinder: Ballhorn, Michael, 69120 Heidelberg (DE); Stein, Günter, 69502 Hemsbach (DE); Clemens, Markus, 64385 Reichelsheim (DE); Hallstein, Wolfgang, 64658 Fürth (DE); Rutz, Stephan, 69469 Weinheim (DE); Gutsch, Michael, 69469 Weinheim (DE)

(57) **Zusammenfassung**

Beschrieben werden Dichtungen aus einem elastomeren Formkörper, der eine durch Plasmapolymerisation aufgetragene Schicht aufweist.

Diese lassen sich insbesondere in Klappenventilen,einsetzen, weisen ein deutlich reduziertes Drehmoment auf und sind sehr widerstandsfähig gegenüber Verschleiß.

## Beschreibung

### Technisches Gebiet

Die vorliegende Erfindung betrifft speziell beschichtete Elastomer-Dichtungen, die sich insbesondere als Dichtungen für Klappenventile einsetzen lassen und die sich durch ein reduziertes Drehmoment auszeichnen, sowie ein Verfahren zu deren Herstellung.

### Stand der Technik

Aus der älteren, nicht vorveröffentlichten DE-A-103 42 273 ist ein Dichtungsring für eine Kolbenstange bekannt, der sich durch ein gutes Ansprech- und Verschleißverhalten auszeichnet und der dadurch gekennzeichnet ist, dass zur Abdichtung vorgesehene Gleitflächen an Abschnitten aus Elastomermaterial mit einer reibungsmindernden Beschichtung versehen sind. Unter anderem werden durch Dünnschicht-Plasmaverfahren erzeugte Beschichtungen erwähnt. Ansonsten wird die Art der Beschichtung nicht näher beschrieben.

Klappenventile sind an sich bekannt. Sie werden zur Steuerung des Durchgangs von Fluiden durch Rohrleitungssysteme, insbesondere in der Getränke- und Lebensmittelindustrie eingesetzt. Klappenventile zeichnen sich in der Regel durch ein im wesentlichen ringförmiges Gehäuse mit einer Fluiddurchgangsöffnung auf, in welcher eine Ventilklappe mit im wesentlichen rundem Rand drehbar um eine Querachse montiert ist, um die Fluiddurchgangsöffnung wahlweise selektiv oder vollständig zu verschließen. Die Ventilklappe wird durch eine Antriebswelle angetrieben, die durch eine Querbohrung des Gehäuses hindurchgeht, und wird durch eine hintere Welle gehalten, die in einer hinteren Bohrung koaxial zu der Querbohrung und diametral gegenüberliegend in dem Gehäuse angeordnet ist. Um die Dichtheit zu sichern, ist das Klappenventil üblicherweise mit einer Dichtung aus einem gummielastischen Material in der Fluiddurchgangsöffnung zwischen der Gehäuseinnenwandung und der Ventilklappe ausgestattet. In Schließstellung legt sich die Ventilklappe mit ihrem Außenumfang dichtend an die innere Umfangsfläche der Dichtmanschette an. Die äußere Umfangsfläche der im wesentlichen hohlzylinderförmigen Dichtmanschette liegt an der Innenumfangsfläche des Ventilgehäuses an. In einem mittleren ringförmigen Bereich ist die Manschette von zwei diametral einander gegenüberliegenden Querdurchgängen durchsetzt, welche von der Antriebswelle und der hinteren Welle durchquert sind. Klappenventile dieser Art sind aus vielen Dokumenten bekannt, beispielsweise aus den Dokumenten EP-A-292,659, US-A-3,778,028, US-A-2002/74,040, GB-A-1,486,934 und WO-A-93/22,587.

Die Dichtmanschette muss so ausgelegt sein, dass einerseits eine ausreichend hohe Dichtigkeit gewährleistet ist, andererseits soll aber das Drehmoment zur Bewegung der Ventilklappe eine bestimmte Grenze nicht überschreiten.

Außerdem sollen Ventilklappen so ausgelegt sein, daß sie auch nach einer Vielzahl von Bewegungen immer noch dichten und daß die Reibung zwischen Ventilklappe und Dichtmanschette im wesentlichen konstant bleibt und daß das Drehmoment einen möglichst niedrigen Wert annimmt.

Bei bekannten Klappenventilen sowie bei bekannten anderen Ventiltypen hat sich herausgestellt, daß das Drehmoment zwischen dem absperrenden Element, beispielsweise bei Klappenventilen der Ventilklappe, und der Dichtmanschette sich im Verlauf des Betriebs vergrößert. Außerdem wäre eine Reduktion des Drehmoments und eine Verringerung der Quellung bei Medienkontakt im Vergleich zu den bekannten Lösungen wünschenswert.

### Darstellung der Erfindung

Aufgabe der Erfindung ist die Bereitstellung einer Dichtung mit gegenüber bekannten Lösungen deutlich reduziertem Drehmoment zwischen dem absperrenden Element und der Dichtung und mit verringerter Quellung bei Kontakt mit flüssigen Medien.

Eine weitere Aufgabe der Erfindung ist die Bereitstellung einer Dichtung und eines Klappenventils der eingangs beschriebenen Art, die auch bei Dauerbetrieb bzw. nach einer hohen Anzahl von Lastwechseln immer noch ein geringes Drehmoment aufweisen und gleichzeitig den Verschleiß der Bauteiloberfläche verringern.

Noch eine weitere Aufgabe der Erfindung ist die Bereitstellung einer Dichtung und eines Klappenventils der eingangs beschriebenen Art, die ohne den Einsatz innerer Gleitmittel auskommen und die insbesondere in der Industrie zur Erzeugung und Verarbeitung von Lebensmitteln eingesetzt werden können.

Überraschenderweise wurde gefunden, dass diese Aufgaben gelöst werden können, indem als Dichtung ein elastomerer Formkörper verwendet wird, der eine durch Plasmapolymerisation aufgetragene Schicht aufweist, die vorzugsweise abgeleitet ist von organischem und/oder metallorganischem Material.

Die vorliegende Erfindung betrifft eine Dichtung aus einem elastomeren Formkörper, der eine durch Plasmapolymerisation aufgetragene Schicht aufweist, vorzugsweise eine Schicht die von organischem und/oder metallorganischem Material abgeleitet ist.

Die Erfindung betrifft ferner ein Klappenventil zur Steuerung des Durchgangs von Fluiden durch Rohrleitungssysteme umfassend
a) ein im wesentlichen ringförmiges Gehäuse mit einer Fluiddurchgangsöffnung, in welcher
b) eine Ventilklappe mit im wesentlichen rundem Rand drehbar um eine Querachse montiert ist, um die Flulddurchgangsöffnung wahlweise selektiv oder vollständig zu verschließen, und
c) einer Dichtung aus elastomerem Material zum Abdichten der Fluiddurchgangsöffnung zwischen Gehäuseinnenwandung und Ventilklappe, wobei
d) die Dichtung aus elastomerem Material die eine durch Plasmapolymerisation aufgetragene Schicht aufweist.

Es hat sich überraschenderweise herausgestellt, daß durch die durch Plasmapolymerisation aufgetragene Schicht eine erhebliche Reduzierung des Drehmoments möglich ist und daß auf die Verwendung innerer Gleitmittel verzichtet werden kann. Außerdem kommt es auch bei längerer Gebrauchsdauer nicht zu einer Zunahme der für einen Lastwechsel aufzubringenden Kraft. Überraschenderweise kommt es trotz mechanischer Beanspruchung nicht zum Abplatzen der Beschichtung der Dichtung. Außerdem wird durch die Beschichtung die Beständigkeit der Dichtung gegenüber in der Rohrleitung zu transportierenden Medien bzw. gegenüber Reinigungsmedien verbessert und dadurch die Standzeit verlängert.

Die erfindungsgemäße Dichtung kann unterschiedlichste Elastomere enthalten.

Als Elastomere werden im Rahmen dieser Erfindung Polymere mit gummielastischem Verhalten verstanden. Dem Fachmann sind solche Werkstoffe bekannt.

Bevorzugte Beispiele für Elastomere sind Acrylat-Kautschuk, PolyesterUrethan-Kautschuk, bromierter Butyl-Kautschuk, Polybutadien, chlorierter Butyl-Kautschuk, chloriertes Polyethylen, Epichlorhydrin-Homopolymer, Polychloropren, sulfuriertes Polyethylen, Ethylen-Acrylat-Kautschuk, Epichlorhydrin-Copolymere, Ethylen-Propylen-Copolymere, schwefelvernetzt oder peroxid-vernetzt, Polyether-Urethan-Kautschuk, Ethylen-Vinylacetat-Copolymer, Fluor-Kautschuk, Fluorsilikon-Kautschuk, hydrierter Nitril-Kautschuk, Butyl-Kautschuk, Nitril-Kautschuk, Naturkautschuk, Thioplaste, Polyfluorphosphazene, Polynorbornen, Styrol-Butadien-Kautschuk und carboxygruppen-haltiger Nitril-Kautschuk.

In einer besonders bevorzugten Ausführungsform der erfindungsgemäßen Dichtung und des erfindungsgemäßen Klappenventils enthält der elastomere Formkörper neben der durch Plasmapolymerisation aufgetragenen Schicht ein inneres Gleitmittel. Beispiele für innere Gleitmittel sind Wachse und/oder Öle, die dem Elastomer zugesetzt worden sind.

Plasmabeschichtete Dichtungen mit inneren Gleitmitteln zeichnen sich durch nochmals verlängerte Standzeiten und Erhalt der ausgezeichneten Gleiteigenschaften selbst in korrodierenden Umgebungen oder Behandlungen aus. Diese Dichtungen eignen sich daher sehr gut für Anwendungen mit oxidierender, basischer oder saurer Reinigung oder für Anwendungen, in denen das Klappenventil stark oxidierenden, basischen oder sauren Medien ausgesetzt ist.

Die Komponenten des erfindungsgemäßen Klappenventils, wie Gehäuse oder Ventilklappe, können aus unterschiedlichsten Materialien bestehen, die an das jeweilige im Rohrleitungssystem zu transportierende Fluid angepasst sind. Beispiele dafür sind Metalle oder Kunststoffe, vorzugsweise thermoplastische Kunststoffe.

Die Beschichtung von Substraten mit Verbindungen durch Abscheidung unter Einsatz von Plasmen ist an sich bekannt. So ist beispielsweise die Hydrophobierung von Substraten mit Siloxanen eine bereits seit langem erprobte Technik.

Die WO-A-01/40,359 beschreibt die Behandlung eines organischen polymeren Materials, wobei ein Substrat enthaltend ein Polymer mit einem Plasma behandelt wird, dem ein siliziumorganisches Additiv zugesetzt worden ist. Auf der Oberfläche des Substrates entsteht dadurch ein Überzug aus SiOₓ₋Gruppen.

Die WO-A-02/28,548 beschreibt ein Verfahren und eine Vorrichtung zum Erzeugen einer Beschichtung. Dabei wird ein feinverteiltes schichtbildendes Material in ein atmosphärisches Plasma eingedüst und schlägt sich auf der zu behandelnden Substratoberfläche nieder. Das Verfahren eignet sich insbesondere zur Herstellung von siliziumorganischen Überzügen.

Durch die Plasmabeschichtung entstehen dünne Schichten aus dem polymerisiertem Ausgangsmaterial, welches vorzugsweise ein organisches Material und/oder ein metallorganisches Material ist, die auf der Oberfläche des jeweiligen Substrats fest und dauerhaft haften. Es wird angenommen, daß die Schicht zumindest teilweise mit der Substratoberfläche kovalent verbunden ist.

Typischerweise betragen die Schichtdicken der kovalent gebundenen organischen Materialien bis zu 5000 nm, vorzugsweise 5 bis 1000 nm.

Beispiele für Ausgangssubstanzen zur Abscheidung der Polymerschichten sind gesättigte oder ungesättigte Kohlenwasserstoffe, die gegebenenfalls Heteroatome, wie beispielsweise Sauerstoff, Stickstoff, Phosphor, Schwefel oder Halogen aufweisen können.

Beispiele für metallorganische Verbindungen sind siliziumorganische Verbindungen, wie Hexamethyldisiloxan, Octamethylcyclotetrasiloxan, Tetraethoxysilan und Tetramethyldisiloxan.

Besonders bevorzugt werden siliziumorganische Verbindungen oder fluororganische Verbindungen eingesetzt.

Bevorzugt werden Dichtungen oder diese enthaltende Klappenventile, die auf mindestens einer Oberfläche eine durch Plasmabeschichtung aufgetragene Schicht aus siliziumorganischem oder fluorkohlenwasserstoffhaltigem Material von bis zu 5000 nm Dicke, vorzugsweise von 5 bis 1000 nm Dicke, aufweisen.

Die Schicht aus kovalent gebundenem organischen Material kann durch Plasmabehandlung auf die Dichtung aufgebracht werden, wobei dem Plasma i) ein polymerisierbares vorzugsweise ein organisches und/oder metallorganisches Material in feinverteilter Form zugesetzt wird oder ii) die plasmabehandelte Dichtung einem zu polymerisierenden vorzugsweise einem organischen und/oder metallorganischen Material ausgesetzt wird oder iii) die Dichtung vor der Plasmabehandlung mit einem zu polymerisierenden vorzugsweise einem organischen und/oder metallorganischen Material getränkt wird.

Die Erfindung betrifft auch Verfahren zur Herstellung der beschichteten Dichtungen.

Die Silikonisierung von Substraten durch Plasmabehandlung ist an sich bekannt und beispielsweise in der WO-A-01/40,359 und WO-A-02/28,548 beschrieben.

Bei der erfindungsgemäßen Plasmabeschichtung der Dichtung werden im Vergleich zu herkömmlichen nasschemischen Verfahren nur geringe Mengen an organischem Material abgeschieden. Dieses äußert sich in einer geringen Dicke der auf dem Substrat ausgebildeten Schichten.

Die Schichtdicken bewegen sich dabei im oben angegebenen Bereich und lassen sich z.B. mittels Elektronenmikroskopie bestimmen.

Die erfindungsgemäßen Verfahren zeichnen sich durch einen geringen Material- und Energieverbrauch aus sowie als lösemittelfreies Verfahren durch eine Schonung der Umwelt.

In einer bevorzugten Ausführungsform weisen die Dichtungen eine Schicht aus siliziumorganischem Material und/oder eine Schicht aus fluororganischem Material auf, die mit der Elastomeroberfläche kovalent verbunden ist. Insbesondere ist die Schicht zusätzlich vernetzt. Dadurch wird deren Lebensdauer erhöht. Zur Herstellung derartiger Dichtungen werden beispielsweise Alkylsilane oder Alkoxysilane eingesetzt: z.B. Methylwasserstoff-Silane, Tri- oder Tetraalkoxysilane, Triaminoalkylsilane und Hexamethylendisiloxan (nachstehend auch "HMDSO") oder aber Fluroalkane oder Fluoralkene, wie z.B. Trifluormethan oder Tetrafluorethylen.

Die Erfindung betrifft auch Verfahren zur Herstellung der oben definierten Dichtung umfassend die Schritte:
i) Herstellung einer Dichtung aus elastomerem Material in an sich bekannter Weise,
ii) Bereitstellen eines Raumbereiches, in dem eine Plasmaentladung brennt und in dem ein polymerisierbares Material, vorzugsweise eine organischen und/oder metallorganische Verbindung in feinverteilter Form vorliegt,
iii) in Kontakt bringen der Dichtung mit der Plasmaentladung, so daß die Dichtung der Plasmaentladung ausgesetzt wird.

In einer alternativen Ausführungsform betrifft das erfindungsgemäße Verfahren die Herstellung der oben definierten Dichtung umfassend die Schritte:
i) Herstellung einer Dichtung aus elastomerem Material in an sich bekannter Weise,
ii') Imprägnieren der Dichtung mit einem polymerisierbarem Material, vorzugsweise einer organischen und/oder metallorganischen Verbindung,
ii) Bereitstellen eines Raumbereiches, in dem eine Plasmaentladung brennt und in dem gegebenenfalls ein polymerisierbares Material, vorzugsweise einer organische und/oder metallorganische Verbindung in feinverteilter Form vorliegt, und
iii) in Kontakt bringen der Dichtung mit der Plasmaentladung, so daß die Dichtung der Plasmaentladung ausgesetzt wird.

In noch einer weiteren alternativen Ausführungsform betrifft das erfindungsgemäße Verfahren die Herstellung der oben definierten Dichtung umfassend die Schritte:
i) Herstellung einer Dichtung aus elastomerem Material in an sich bekannter Weise,
ii) Bereitstellen eines Raumbereiches, in dem eine Plasmaentladung brennt und in dem gegebenenfalls ein polymerisierbares Material, vorzugsweise eine organische und/oder metallorganische Verbindung in feinverteilter Form vorliegt,
iii) in Kontakt bringen der Dichtung mit der Plasmaentladung, so daß die Dichtung der Plasmaentladung ausgesetzt wird, und
iv) Imprägnieren der plasmabehandelten Dichtung mit einem polymerisierbaren Material, vorzugsweise einer organischen und/oder metallorganischen Verbindung.

Von diesen Verfahrensvarianten ist die erstere besonders bevorzugt.

Die Plasmabehandlung erfolgt durch kontinuierliches oder vorzugsweise schrittweises Einbringen der Dichtungen in die Plasmaentladung.

Es können unterschiedlichste Plasmabehandlungen zum Einsatz kommen. Beispiele dafür sind Entladungen bei Atmosphärendruck, insbesondere aber bei Unterdruck.

Typische Arbeitsdrucke im Plasma betragen 0,01 Pa bis 100Pa, vorzugsweise 0,5 bis 5 Pa.

Zur Herstellung der erfindungsgemäß beschichteten Dichtungen werden zur Beschichtung vorzugsweise organische und/oder metallorganische Verbindungen eingesetzt. Dabei kann es sich um monomere, oligomere oder polymere Verbindungen handeln.

Bevorzugt werden siliziumorganische Verbindungen eingesetzt. Dabei kann die organische Gruppe entweder direkt an das Siliziumatom gebunden sein oder über ein Heteroatom, wie das Sauerstoffatom. Ferner kann die organische Gruppe ihrerseits substituiert sein, beispielsweise mit Halogenatomen, Alkylgruppen oder Arylgruppen. Beispiele dafür sind Haloalkylgruppen oder Alkylarylgruppen.

Ebenfalls bevorzugt werden fluororganische Verbindungen, wie z.B. Fluroalkane oder Fluoralkene.

Es können auch Gemische aus siliziumorganischen und fluororganischen Verbindungen eingesetzt werden.

Geeignete siliziumorganische Verbindungen sind monomere, oligomere oder polymere Organosilane oder Organosiloxane, wie Alkyl- oder Alkoxysilane oder -siloxane.

Neben gegebenenfalls substituierten organischen Resten kann das Organosilan oder Organosiloxan noch weitere Atome aufweisen, wie Wasserstoff- und/oder Halogenatome.

Im erfindungsgemäßen Verfahren können auch Mischungen unterschiedlicher polymerisierbarer Verbindungen eingesetzt werden.

Die Erfindung betrifft auch die Verwendung von mit organischen Verbindungen plasmabeschichteten Dichtungen in Klappenventilen.

Die nachfolgenden Beispiele beschreiben die Erfindung ohne diese zu begrenzen.

### Beispiele

In eine handelsübliche Plasmaanlage wurden bei einem Prozessdruck zwischen 1 und 3 Pa ein oder mehrere silanhaltige(r) Percursor(en), wie z.B. HMDSO oder TEOS (Tetraethoxysilan) bzw. ein oder mehrere fluorhaltige(r) Precursoren, wie z.B. Trifluormethan oder Oktafluorpropan, sowie ein Trägergas, wie z.B. Argon eingeleitet. Nach einer Homogenisierungszeit von etwa 60 s wurde das Plasma mit einer Leistung von etwa 150 W gezündet und die elastomeren Werkstoffe in der Plasmaanlage für etwa 2400 s beschichtet.

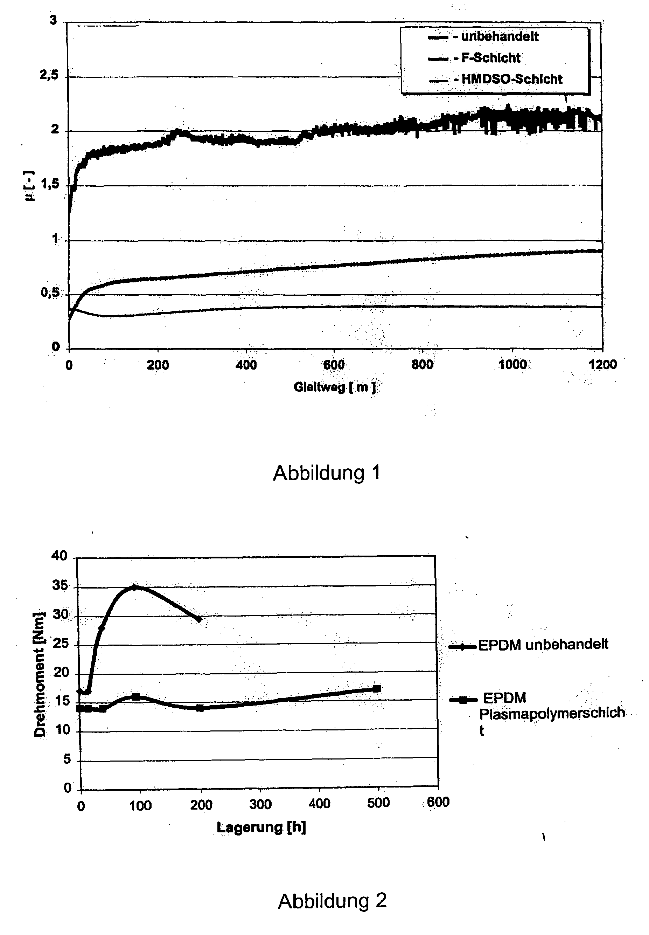

Die Leistungsfähigkeit der Plasmapolymerschichten wurde durch Reibwertmessungen überprüft. Dazu wurde der Reibwert eines plasmabeschichteten elastomeren Werkstoffs mit dem eines unbehandelten elastomeren Werkstoffs verglichen (Abbildung 1).

In Abbildung 2 wird gezeigt, dass die Medienbeständigkeit von elastomeren Werkstoffen durch Plasmapolymerschichten verbessert werden kann und damit die Standzeit von Elastomerdichtungen verlängert werden kann. Abbildung 2 zeigt die Ergebnisse von Messungen des Drehmoments nach Lagerung von elastomeren Werkstoffen. In Abbildung 2 ist dargestellt, dass sich das Drehmoment eines unbehandelten EPDM-Werkstoffs durch Einwirken von Wasserdampf bei 130 °C drastisch erhöht, während ein plasmabeschichteter EPDM-Werkstoff- im Rahmen der Messgenauigkeit - keine Erhöhung des Drehmoments zeigt.

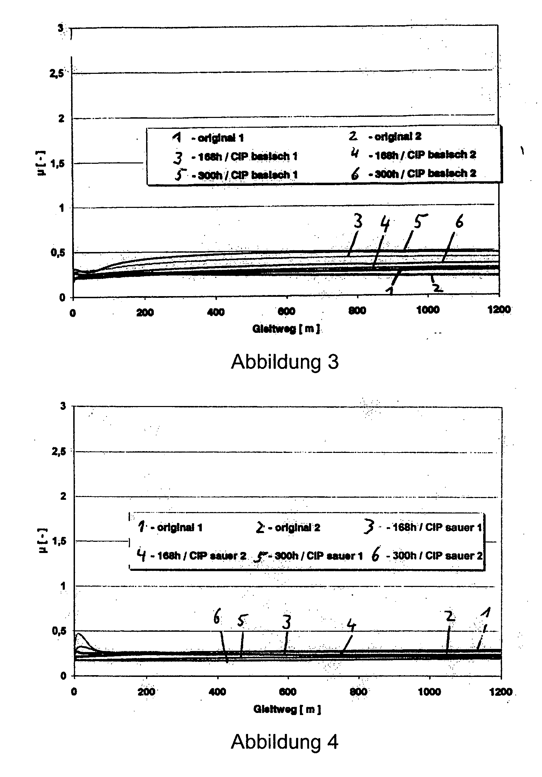

In Abbildung 3 werden Reibwertmessungen an Prüfkörpern aus einem mit Hexamethyldisiloxan plasmabeschichteten EPDM-Werkstoff gezeigt, der ein inneres Gleitmittel enthält. Dargestellt sind sechs Messungen, jeweils zwei an unbehandelten Prüfkörpern, an Prüfkörpern, die 168 h lang in einem basischen Reinigungsmittel gelagert worden sind, und an Prüfkörpern, die 300 h lang in einem basischen Reinigungsmittel gelagert worden sind.

In Abbildung 4 werden Reibwertmessungen an Prüfkörpern aus einem mit Hexamethyldisiloxan plasmabeschichteten EPDM-Werkstoff gezeigt, der ein inneres Gleitmittel enthält. In Abänderung zu Abbildung 3 wird hier die Lagerung der Prüfkörper in einem sauren Reinigungsmittel durchgeführt.

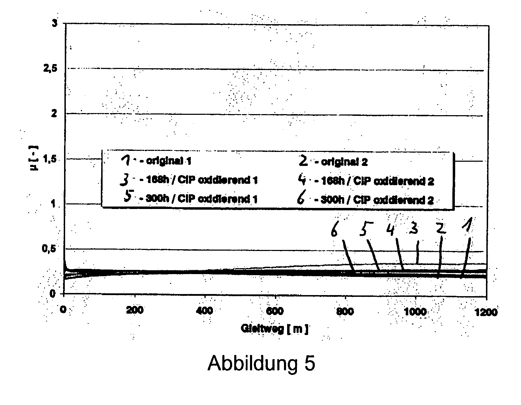

In Abbildung 5 werden Reibwertmessungen an Prüfkörpern aus einem mit Hexamethyldisiloxan plasmabeschichteten EPDM-Werkstoff gezeigt, der ein inneres Gleitmittel enthält. In Abänderung zu Abbildung 3 wird hier die Lagerung der Prüfkörper in einem oxidierend wirkenden Reinigungsmittel durchgeführt.

Abbildungen 3, 4 und 5 zeigen die Ergebnisse von Messungen des Drehmoments nach Lagerung von elastomeren Werkstoffen. Man erkennt aus diesen Abbildungen, dass selbst nach einer Lagerzeit von 300 h in unterschiedlichen und aggressiven Reinigungsmitteln sich keine Schädigung des Prüfkörpers zeigte. Das innere Gleitmittel hat keinen störenden Einfluß auf die Haftung oder Beständigkeit der Plasmapolymerschicht. Im Gegenteil diffundiert das innere Gleitmittel durch die Plasmapolymerschicht und unterstützt somit die Gleiteigenschaften der Plasmapolymerschicht.

## Patentansprüche

1. Dichtung aus einem elastomeren Formkörper, der eine durch Plasmapolymerisation aufgetragene Schicht aufweist.

2. Dichtung nach Anspruch 1, **dadurch gekennzeichnet**, das die durch Plasmapolymerisation aufgetragene Schicht sich von mindestens einem organischem und/oder metallorganischem Material ableitet.

3. Dichtung nach Anspruch 1, **dadurch gekennzeichnet, daß** der elastomere Formkörper mindestens ein elastomeres Material aufweist, das ausgewählt wird aus der Gruppe bestehend aus Acrylat-Kautschuk, Polyester-Urethan-Kautschuk, bromiertem Butyl-Kautschuk, Polybutadien, chloriertem Butyl-Kautschuk, chloriertem Polyethylen, Epichlorhydrin-Homopolymer, Polychloropren, sulfuriertem Polyethylen, Ethylen-Acrylat-Kautschuk, Epichlorhydrin-Copolymere, Ethylen-Propylen-Copolymere, schwefelvernetzt oder peroxid-vernetzt, Polyether-Urethan-Kautschuk, Ethylen-Vinylacetat-Copolymer, Fluor-Kautschuk, Fluorsilikon-Kautschuk, hydriertem Nitril-Kautschuk, Butyl-Kautschuk, Nitril-Kautschuk, Naturkautschuk, Thioplastem, Polyfluorphosphazenem, Polynorbornen, Styrol-Butadien-Kautschuk und carboxygruppen-haltigem Nitril-Kautschuk.

4. Dichtung nach Anspruch 1, **dadurch gekennzeichnet, daß** die Schicht eine Dicke von bis zu 5000 nm, vorzugsweise von 5 bis 1000 nm, aufweist.

5. Dichtung nach Anspruch 2, **dadurch gekennzeichnet, daß** das organische oder metallorganische Material sich von siliziumorganischen Verbindungen und/oder fluororganischen Verbindungen ableitet.

6. Dichtung nach Anspruch 5, **dadurch gekennzeichnet, daß** diese auf mindestens einer Oberfläche eine durch Plasmabeschichtung aufgetragene Schicht aus siliziumorganischem Material und/oder fluororganischem Material von bis zu 5000 nm Dicke, vorzugsweise von 5 bis 1000 nm Dicke, aufweist.

7. Dichtung nach Anspruch 6, **dadurch gekennzeichnet, daß** als siliziumorganisches Material Alkylsilane, Alkoxysilane, Alkylsiloxane und/oder Alkoxysiloxane eingesetzt werden.

8. Dichtung nach Anspruch 1, **dadurch gekennzeichnet, daß** der elastomere Formkörper ein inneres Gleitmittel enthält.

9. Klappenventil zur Steuerung des Durchgangs von Fluiden durch Rohrleitungssysteme umfassend
a) ein im wesentlichen ringförmiges Gehäuse mit einer Fluiddurchgangsöffnung, in welcher
b) eine Ventilklappe mit im wesentlichen rundem Rand drehbar um eine Querachse montiert ist, um die Fluiddurchgangsöffnung wahlweise selektiv oder vollständig zu verschließen, und
c) eine Dichtung aus elastischem Material zum Abdichten der Fluiddurchgangsöffnung zwischen Gehäuseinnenwandung und Ventilklappe, wobei
d) die Dichtung aus elastomerem Material eine durch Plasmapolymerisation aufgetragene Schicht aufweist.

10. Klappenventil nach Anspruch 9, **dadurch gekennzeichnet, daß** die Dichtung aus elastomerem Material ein inneres Gleitmittel enthält.

11. Verfahren zur Herstellung der Dichtung nach Anspruch 1 umfassend die Schritte:
i) Herstellung einer Dichtung aus elastomerem Material in an sich bekannter Weise,
ii) Bereitstellen eines Raumbereiches, in dem eine Plasmaentladung brennt und in dem eine polymerisierbare Verbindung in feinverteilter Form vorliegt, und
iii) in Kontakt bringen der Dichtung mit der Plasmaentladung, so daß die Dichtung der Plasmaentladung ausgesetzt wird.

12. Verfahren zur Herstellung der Dichtung nach Anspruch 1 umfassend die Schritte:
i) Herstellung einer Dichtung aus elastomerem Material in an sich bekannter Weise,
ii') Imprägnieren der Dichtung mit einer polymerisierbaren Verbindung,
ii) Bereitstellen eines Raumbereiches, in dem eine Plasmaentladung brennt und in dem gegebenenfalls eine polymerisierbare Verbindung in feinverteilter Form vorliegt, und
iii) in Kontakt bringen der Dichtung mit der Plasmaentladung, so daß die Dichtung der Plasmaentladung ausgesetzt wird.

13. Verfahren zur Herstellung der Dichtung nach Anspruch 1 umfassend die Schritte:
i) Herstellung einer Dichtung aus elastomerem Material in an sich bekannter Weise,
ii) Bereitstellen eines Raumbereiches, in dem eine Plasmaentladung brennt und in dem gegebenenfalls eine polymerisierbare Verbindung in feinverteilter Form vorliegt,
iii) in Kontakt bringen der Dichtung mit der Plasmaentladung, so daß die Dichtung der Plasmaentladung ausgesetzt wird, und
iv) Imprägnieren der plasmabehandelten Ventilklappe mit einer polymerisierbaren Verbindung.

14. Verwendung von Dichtungen nach Anspruch 1 in Klappenventilen.
